# EUROPÄISCHE PATENTSCHRIFT

(11) **EP 2 976 303 B1**
(45) Veröffentlichungstag und Bekanntmachung des Hinweises auf die Patenterteilung: **02.05.2018**
(21) Anmeldenummer: 14713065.2
(22) Anmeldetag: 18.03.2014
(51) Int. Cl.: C03B 19/12, C03C 3/06, C03C 4/00, G02B 1/00

(54) **VERFAHREN ZUR FLUORIERUNG VON DOTIERTEM QUARZGLAS**
METHOD FOR FLUORINATING DOPED QUARTZ GLASS
PROCÉDÉ SERVANT À FLUORER DU VERRE DE QUARTZ DOPÉ

(30) Priorität: 19.03.2013 DE 102013204815
(43) Veröffentlichungstag der Anmeldung: 27.01.2016
(73) Patentinhaber: Heraeus Quarzglas GmbH & Co. KG, 63450 Hanau (DE)
(72) Erfinder: LANGNER, Andreas, 63579 Freigericht (DE); SCHÖTZ, Gerhard, 63741 Aschaffenburg (DE); SUCH, Mario, 06773 Gräfenhainichen (DE); SCHWERIN, Malte, 06116 Halle a.d. Saale (DE); TROMMER, Martin, 06749 Bitterfeld (DE); GRIMM, Stephan, 07743 Jena (DE); KALIDE, André, 07806 Neustadt a.d. Orla (DE); LEICH, Martin, 07751 Jena (DE); JUST, Florian, 07743 Jena (DE)
(74) Vertreter: Heraeus IP
(86) Internationale Anmeldenummer: PCT/EP2014/055400
(87) Internationale Veröffentlichungsnummer: WO 2014/147062

(56) Entgegenhaltungen:
- DE-A1-102007 045 097
- DE-B4-102004 006 017
- US-A- 4 605 428
- US-A- 5 262 365
- US-A1- 2007 297 735
- US-A1- 2011 116 160

## Beschreibung

Die vorliegende Erfindung betrifft ein Verfahren zur Herstellung von dotiertem Quarzglas. Weiterhin betrifft die vorliegende Erfindung nach dem vorgestellten Verfahren erhältliches Quarzglas, sowie dessen Verwendung in der Lasertechnologie, beispielsweise als Large-Mode-Area Faser, Anti-Guiding-Laserfaser, Faser-Endcaps, Kern-Mantel-Glasfasern oder in lichtführenden Strukturen.

### Technisches Umfeld

Eines der Haupteinsatzgebiete für Quarzglas ist die Lasertechnologie, wo es beispielsweise für die Herstellung von Faserverstärkern oder Faserlasern verwendet wird. Dazu wird das Quarzglas mit Fremdatomen dotiert, die eine Verstärkung der Laserstrahlung im Wirtsmaterial Quarzglas bewirken. In der Regel handelt es sich bei diesen Dotierstoffen um Seltene Erden wie Ytterbium und um Übergangsmetalle wie beispielsweise Chrom oder Titan, die eine möglichst hohe Verstärkerleistung erzielen sollen. Allerdings ist die Menge an Fremdatomen, die in das Quarzglas eingebracht werden kann, begrenzt, da es ab einer gewissen Konzentration zu einer Dämpfung der zu verstärkenden Laserstrahlung kommt. Gleichzeitig ändert sich durch die Dotierung des Quarzglases dessen Brechungsindex, was zu unerwünschten Effekten führt. Um diesen Nachteilen entgegenzuwirken, wird das Quarzglas zusätzlich noch mit Fluor dotiert, von dem bekannt ist, dass es beispielsweise den Brechungsindex senkt.

### Stand der Technik

DE 10 2007 045 097 A1 beschreibt die Herstellung von dotiertem Quarzglas. Um die Homogenität der Dotierstoffverteilung zu verbessern, wird eine Suspension bereitgestellt, die SiO₂ Teilchen sowie eine Ausgangsverbindung für einen Dotierstoff in einer wässrigen Lösung enthält. Die Flüssigkeit wird unter Bildung eines dotierten Zwischenprodukts, das Teilchen des Dotierstoffs oder Teilchen einer Vorläufersubstanz des Dotierstoffs enthält, entfernt. Anschließend wird durch Sintern ein dotiertes Quarzglas gebildet. Die Teilchen des Dotierstoff oder die Teilchen der Vorläufersubstanz werden als Präzipitat einer pH-Wert gesteuerten Fällungsreaktion erzeugt.

US 5,262,365 beschreibt die Herstellung eines porösen Glaskörpers, der mittels VAD- oder OVD-Methoden oder alternativ mit Hilfe der Sol-Gel-Methode hergestellt werden kann. Dieser Körper wird zuerst mit Aluminium und Seltenen Erden und in einem zweiten Schritt mit Fluor dotiert. Ziel dieses Verfahrens ist die Herstellung eines dotierten Quarzglases, das transparent und blasenfrei ist.

DE 10 2004 006 017 B4 beschreibt ein Verfahren zur Herstellung laseraktiven Quarzglases, bei dem ein Pressling aus einer Dispersion aus SiO₂-Pulver, Kationen von Seltenerdmetallen und Übergangsmetalle erzeugt wird, der in weiteren Schritten durch Aufheizen auf eine Temperatur von mindestens 1000 °C getrocknet und gereinigt wird und dadurch einen OH-Gehalt von weniger als 10 ppm aufweist, bevor er unter Bildung des dotierten Quarzglases gesintert wird.

US 2007/0297735 A1 beschreibt eine optische Faser, deren Kern neben Alkalimetalloxiden wie K₂O, Na₂O, Li₂O, Rb₂O oder Cs₂O auch Chlor und Fluor enthält, wobei die durchschnittliche Konzentration an Fluor größer ist als die der Alkalimetalloxide. Durch die richtige Wahl der Konzentration der Alkalimetalloxiddotierung kann die Faserdämpfung optimiert werden.

US 2011/0116160 A1 offenbart einen optischen Faserverstärker, dessen Kern mit Nanopartikeln Seltener Erden dotiert ist, die in eine Kernmatrix eingebettet sind. Bei den Seltenen Erden kann es sich um Erbium, Thulium oder Ytterbium handeln. Weiterhin enthält der Kern einen zusätzlichen Dotierstoff wie Germanium, Fluor, Aluminium oder Phosphor.

US 4,605,428 offenbart ein Verfahren zur Herstellung von Quarzglas, bei dem auf Basis zerkleinerter Siliziumdioxid-haltiger Partikel ein Gel geformt wird, woraus ein im Wesentlichen trockener poröser Körper mit einem Gesamtporenvolumen von 10 bis 50 % erhalten wird. Der poröse Körper wird anschließend bei üblicherweise unter 1400 °C zu Quarzglas gesintert.

### Aufgabenstellung

Die Dotierung mit Fluor führt dazu, dass ein Teil der vorher eingebrachten Kationen der Seltenen Erdelemente und/oder Übergangsmetalle während der Fluorierung wieder aus dem Quarzglas ausdiffundiert und so eine optimale Einstellung der optischen Eigenschaften des Quarzglases in der gewünschten Form nicht möglich ist.

Es ist daher die Aufgabe der vorliegenden Erfindung, ein Fluorierungsverfahren für dotiertes Quarzglas bereitzustellen, das ein Ausdiffundieren der Seltenen Erden während der Fluorierung verhindert und gleichzeitig eine homogene Verteilung der Dotierstoffe im Quarzglas gewährleistet.

### Darstellung der Erfindung

Die Aufgabe kann erfindungsgemäß dadurch gelöst werden, dass zuerst ein mit Dotierstoffen dotiertes Zwischenprodukt durch Fällung aus einer Dispersion hergestellt wird, welches in einem separaten Schritt mit einer gasförmigen Fluorquelle behandelt wird, bevor durch Sintern das dotierte Quarzglas erzeugt wird.

Ein Gegenstand der vorliegenden Erfindung ist daher ein Verfahren zur Herstellung von dotiertem Quarzglas, das folgende Schritte umfasst:
a) Bereitstellen einer Dispersion, die
   1) SiO₂-Teilchen und
   2) eine Komponente ausgewählt aus der Gruppe bestehend aus einem Dotierstoff, einer Vorläufersubstanz eines Dotierstoffs sowie eine beliebige Mischung hiervon,
   in einer Flüssigkeit enthält,
b) Erzeugen eines Präzipitats von mindestens einem Teil eines Dotierstoffs und/oder der Vorläufersubstanz eines Dotierstoffs in der Dispersion,
c) Reduzierung der Menge der flüssigen Phase der Dispersion unter Ausbildung eines dotierten Zwischenproduktes,
d) Behandlung des dotierten Zwischenproduktes mit einem Gas oder einer Gasmischung, das/die eine oder mehrere gasförmige Fluorquelle(n) enthält/enthalten, unter Erzeugung eines fluorierten Zwischenproduktes,
e) Sintern des fluorierten Zwischenproduktes unter Ausbildung des dotierten Quarzglases.

Der Dotierstoff im Rahmen der vorliegenden Erfindung umfasst mindestens eine Substanz, die dem Quarzglas zur Erzielung gewünschter Eigenschaften absichtlich hinzugefügt wird. Der Dotierstoff oder die Dotierstoffe dienen dazu, die mechanischen und optischen Eigenschaften des dotierten Quarzglases zu verbessern oder anzupassen, wie zum Beispiel den Brechungsindex oder die Viskosität. Unter einer Vorläufersubstanz eines Dotierstoffs wird im Rahmen der vorliegenden Erfindung eine Substanz verstanden, die in einem späteren Stadium des Verfahrens infolge einer chemischen Reaktion oder durch Veränderung ihres Oxidationszustandes in den eigentlichen Dotierstoff umgewandelt wird. Sofern im Folgenden von Dotierstoff die Rede ist, soll dieser Begriff der Einfachheit halber auch eine Ausgangsverbindung oder Vorläufersubstanz eines Dotierstoffs umfassen, sofern nichts anderes ausdrücklich gesagt ist oder sich aus den Umständen ergibt. Im Rahmen der vorliegenden Erfindung werden vorzugsweise ein oder mehrere Dotierstoffe sowie eine Mischung verschiedener Dotierstoffe verwendet. Der Übersichtlichkeit halber soll daher der Begriff Dotierstoff für einen oder mehrere Dotierstoff und/oder eine Mischung verschiedener Dotierstoffe stehen, sofern nichts anderes erwähnt ist oder sich aus den Umständen ergibt.

In einer bevorzugten Ausgestaltung der vorliegenden Erfindung umfasst die Flüssigkeit, in der die SiO₂-Teilchen und der Dotierstoff dispergiert sind, Wasser. Vorzugsweise ist der Wassergehalt der Flüssigkeit größer als 70%, weiter bevorzugt größer als 80% und insbesondere größer als 90%. Bei der Flüssigkeit kann es sich beispielsweise um eine ammoniakalische Lösung handeln.

Daher handelt es sich bei der Dispersion vorzugsweise um eine Suspension.
In einer bevorzugten Ausführungsform des erfindungsgemäßen Verfahrens wird die Dispersion aus SiO₂-Teilchen zunächst ohne den Dotierstoff homogenisiert und dieser homogenisierten Dispersion wird dann der Dotierstoff oder eine Vorläufersubstanz eines Dotierstoffs in gelöster Form zugeführt.

In einer bevorzugten Ausführungsform des erfindungsgemäßen Verfahrens werden als Dotierstoff Metallverbindungen, vorzugsweise ein oder mehrere Oxide der Seltenen Erden und/oder der Übergangsmetalle verwendet. Vorzugsweise zeichnet sich das erfindungsgemäße Verfahren dadurch aus, dass als Dotierstoff und/oder ihre Vorläufersubstanz ein oder mehrere Oxide der Seltenen Erden verwendet wird/werden.

Unter dem Begriff Seltene Erden werden im Rahmen der vorliegenden Erfindung die Lanthanoide, die Elemente der dritten Nebengruppe des Periodensystems der Elemente sowie Scandium und Yttrium zusammengefasst. Für derartige Dotierstoffe sind dem Fachmann Ausgangsverbindungen und geeignete Lösungsmittel bekannt. Als Beispiele für Vorläufersubstanzen oder Ausgangsverbindungen seien hier Chloride wie YbCl₃ oder ErCl₃ genannt. Diese Vorläufersubstanzen werden dann im Verlauf des Prozesses in die entsprechenden Oxide, die eigentlichen Dotierstoffe umgewandelt. Diese Umwandlung kann beispielsweise im Rahmen einer chemischen Reaktion erfolgen. Als Dotierstoff im Sinne der vorliegenden Erfindung ist eine Verbindung zu verstehen, die den Dotanden umfasst und diesen während des Dotierungsprozesses freisetzen kann. Der Dotand liegt üblicherweise in ionischer Form, meistens als Kation vor, und bezeichnet die eigentliche Substanz, mit der das Quarzglas dotiert ist. Als veranschaulichendes Beispiel soll die Dotierung mit Ytterbium herangezogen werden. In diesem beispielhaften, aber durchaus nicht beschränkenden Fall wäre YbCl₃ als Vorläufersubstanz im Sinne der vorliegenden Erfindung zu verstehen, die beispielsweise mit Hilfe einer chemischen Reaktion in das Oxid (z.B. Yb₂O₃), das in diesem Falle den Dotierstoff darstellt, umgewandelt wird. Dieser Dotierstoff setzt wiederum den Dotanden, in diesem Falle das Yb-Kation frei, das in das Quarzglas eingebaut wird.

Vorzugsweise werden als Dotierstoffe und/oder ihre Vorläufersubstanzen ein oder mehrere Oxide der Seltenen Erden verwendet, vorzugsweise in Kombination mit einem Oxid ausgewählt aus der Gruppe bestehend aus Aluminiumoxid, Boroxid und Phosphoroxid sowie beliebige Mischungen hiervon.

In einer bevorzugten Ausführungsform des erfindungsgemäßen Verfahrens werden als Dotierstoffe ein oder mehrere Oxide ausgewählt aus der Gruppe bestehend aus Al₂O₃, Yb₂O₃, Ce₂O₃, Nd₂O₃, Sm₂O₃, Er₂O₃, Tm₂O₃, La₂O₃, Y₂O₃, Eu₂O₃, Ho₂O₃, Pr₂O₃, NbO₂, Ni₂O₃, Sc₂O₃, TaO₂, ZrO₂, GeO₂, B₂O₃, P₂O₃, SnO₂, CrO, Cr₂O₃, CrO₂, NiO, ZnO, MgO, CaO, SrO, BaO, MnO₂, Ga₂O₃ und TiO₂ verwendet. Vorzugsweise werden Mischungen aus zwei oder mehreren Dotierstoffen verwendet. Besonders gute Erfolge bezüglich des Einbaus von Fluor sowie der Ausdiffusion von Dotanden der Seltenen Erden während der Fluorierung lassen sich erzielen, wenn Aluminium als Codotand verwendet wird, da es als Lösungsvermittler fungiert. Bevorzugt wird dabei Al₂O₃ als Dotierstoff und Al-Kationen als Dotanden verwendet.
In einer bevorzugten Ausführungsform wird als Dotierstoff eine Mischung aus Al₂O₃ mit einem oder mehreren Oxiden der Seltenen Erden eingesetzt. Besonders bevorzugt liegt das Al₂O₃ in einer Stoffmenge vor, die größer ist als die des/der Seltenen Erdoxids/Erdoxide. Speziell ist das molare Verhältnis von Al₂O₃ zur Summe der Seltenerdmetalloxide mindestens 2:1, vorzugsweise mindestens 3:1, insbesondere mindestens 4:1. Speziell bevorzugt ist eine Kombination von Al₂O₃ mit Yb₂O₃. Alternativ oder ergänzend kann das Al₂O₃ auch durch Phosphoroxide und/oder Boroxide ersetzt werden.

Bevorzugt werden die Dotierstoffe der Dispersion in Form einer oder mehrerer Dotierstofflösungen zugeführt. Dabei ist die Zufuhr in einer einzigen Dotierstofflösung zu bevorzugen, sofern sich die Dotierstoffe zusammen in Lösung bringen lassen.
Bei der Zufuhr der Dotierstoffe zur Dispersion kann es zu einer lokalen Übersättigung und damit zu einer inhomogenen Verteilung kommen, was wiederum dazu führt, dass die gewünschte Glasbildung nicht erreicht wird. Um dem entgegenzuwirken wird eine Verfahrensweise bevorzugt, bei der die Dispersion während der Zugabe des Dotierstoffs mechanisch bewegt wird. Die Bewegung der Suspension erfolgt dabei mittels bekannten und geeigneten Methoden, wie beispielsweise Rühren, Verwirbeln, Schütteln oder unter Einsatz von Ultraschall.

In einer bevorzugten Ausführungsform des erfindungsgemäßen Verfahrens erfolgt die Bereitstellung der Dispersion in Schritt a) dadurch, dass der/die Dotierstoff(e) und/oder seine/ihre Vorläufersubstanz(en) SiO₂-Teilchen, die in einer Flüssigkeit vorliegen, tropfenweise und/oder mittels Sprühnebelverfahren zugeführt wird/werden.

Vorzugsweise erfolgt die Zugabe der Dotierstofflösung zu der Dispersion der SiO₂-Teilchen tropfenweise, zum Beispiel zeitlich gesteuert nach vorgegebenen Zeitabständen. Der Umfang der mechanischen Bewegung der Dispersion und der zeitliche Abstand der Zutropfung sind dabei bevorzugt so aufeinander abgestimmt, dass jeder Tropfen in eine möglichst homogene Dispersion gelangt und auf diese Weise eine homogene Verteilung des Dotierstoffs oder der Dotierstoffe erreicht wird.
Alternativ und ebenfalls bevorzugt kann die Zugabe der Dotierstofflösung und der SiO₂-Teichen, die in einer Flüssigkeit vorliegen, mittels Sprühnebelverfahren erfolgen. Dabei wird die Dotierstofflösung in einer Ausführungsform mit Hilfe einer Sprühnebelvorrichtung zerstäubt. Dieses Sprühnebelfeld überstreicht eine relativ große Oberfläche der Dispersion der SiO₂-Teilchen, die in Bewegung gehalten wird, und sorgt so für eine homogene Verteilung des Dotierstoffs in der Dispersion. In einer alternativen Variante des Sprühnebelverfahrens kann die SiO₂-Suspension zerstäubt werden, die dann als Sprühnebel auf die Dotierstofflösung einwirkt. In einer weiteren Alternative können sowohl die Dotierstofflösung als auch die SiO₂-Suspension zerstäubt werden. Eine weitere Alternative ist das gemeinsame Versprühen der Dotierstofflösung und der Dispersion der SiO₂-Teilchen in einer Mehrstoffdüse, beispielsweise in einem Sprühtrockner. Weiterhin kann mehr als eine Sprühdüse eingesetzt werden, um eine effiziente Arbeitsweise zu gewährleisten.

In einer bevorzugten Ausführungsform des erfindungsgemäßen Verfahrens ist die Dispersion eine Suspension, die vorzugsweise einen pH-Wert zwischen 5 und 12, insbesondere zwischen 9 und 10 aufweist. Dieser Bereich gewährleistet eine hohe Stabilität der Suspension, da interpartikuläre, abstoßende Kräfte die Sedimentationsneigung abschwächen. Andererseits werden die Löslichkeitsprodukte der an und für sich schwer löslichen Dotierstoffe nicht unterschritten und der Einsatz von Hilfsstoffen, die zu unerwünschten Verunreinigungen führen, wird vermieden. Bevorzugt erfolgt die Einstellung und Änderung des pH-Wertes der Suspension durch Zugabe alkalifreier Säuren oder Basen, besonders bevorzugt durch die Zugabe von Ammoniak, Ammoniumsalzen oder Aminen.

In einer bevorzugten Ausführungsform des erfindungsgemäßen Verfahrens erfolgt die Erzeugung des Präzipitats in Schritt b) durch eine pH-Wert gesteuerte Fällungsreaktion. Vorzugsweise wird die Präzipitation von mindestens einem Teil des Dotierstoffs oder der Dotierstoffe durch eine Fällungsreaktion, insbesondere durch eine durch eine Änderung des pH-Wertes erzeugte Fällungsreaktion, der Dotierstoffe und/oder ihrer Vorläufersubstanzen hervorgerufen. Dabei wird der pH-Wert der Dispersion vorzugsweise so eingestellt, dass bei einer Zugabe des Dotierstoffs unmittelbar die Fällungsreaktion einsetzt. Alternativ und ebenfalls bevorzugt wird der pH-Wert der Dispersion so verändert, dass der in der Dispersion anfangs gelöste Dotierstoff ausfällt.

Die Fällung führt in der Regel zur Bildung feiner Teilchen des Dotierstoffs in der Dispersion, was zum einen die Homogenität der Dotierstoffverteilung fördert und zum anderen zur Stabilisierung der Dispersion beiträgt. Wesentlich ist dabei, dass die Dotierstoff-Teilchen in der noch flüssigen Suspension homogen und definiert ausfallen und an den vorhandenen SiO₂-Partikeln unmittelbar adsorbiert und dadurch immobilisiert werden.

In einer bevorzugten Ausführungsform des erfindungsgemäßen Verfahrens wird die pH-Wert-gesteuerte Fällungsreaktion als Mischfällung herbeigeführt. Bei dieser Mischfällung wird der pH-Wert der Dispersion vorzugsweise so eingestellt, dass sich bei gleichzeitiger Zugabe mehrerer Dotierstoffe unmittelbar die Fällungsreaktion für alle Dotierstoffe einsetzt. Dabei fallen leichter lösliche und schwerer lösliche Dotierstoffe bevorzugt gemeinsam aus, woraus sich eine besonders homogene Verteilung der Dotierstoffe und ein definiertes und homogenes Präzipitat ergeben, auch wenn sich die Löslichkeitsprodukte der Dotierstoffe unterscheiden.

Die Schnelligkeit, mit der der Dotierstoff ausfällt, lässt sich durch die Veränderung des pH-Wertes der Dispersion der SiO₂-Teilchen steuern. Vorzugsweise erfolgt die Veränderung des pH-Wertes durch eine schnelle Zugabe der pH-Wert verändernden Substanz. Alternativ bevorzugt erfolgt die Veränderung des pH-Wertes durch eine langsame Zugabe der pH-Wert verändernden Substanz, so dass der Dotierstoff graduell ausfällt. Weiterhin bevorzugt ist eine Ausführungsform, bei der die pH-Wert verändernde Substanz auf der Dispersion der SiO₂-Teilchen und des Dotierstoff und/oder seiner Vorläufersubstanz versprüht wird.

Bei der Zugabe der Dotierstoffe kann es zu einer Veränderung des pH-Wertes der Dispersion kommen. Um dies zu kompensieren, insbesondere um einem starken Abfall des pH-Wertes entgegenzuwirken, wird der pH-Wert der Dispersion beim Zuführen des gelösten Dotierstoffs oder einer Vorläufersubstanz vorzugsweise durch die Zugabe eines Hilfsstoffs gehalten oder eingestellt. Besonders bevorzugt enthält die Dispersion einen Überschuss an Ammoniak, der zur Abpufferung des pH-Wertes beiträgt.

Bei einer alternativen und gleichermaßen bevorzugten Variante des erfindungsgemäßen Verfahrens wird die pH-Wert-gesteuerte Fällungsreaktion dadurch herbeigeführt, dass der pH-Wert der Dispersion auf einen ersten niedrigeren Wert eingestellt wird, wobei der Dotierstoff in der Dispersion gelöst ist. Anschließend wird der pH-Wert der Dispersion erhöht, wobei Teilchen des Dotierstoffs ausfallen. Das hat den Vorteil, dass sich der gelöste Dotierstoff in der gesamten Dispersion und insbesondere auch in etwaigen porösen SiO₂-Teilchen oder SiO₂-Teilchenaggregaten homogen verteilt.

Bei der Verwendung von mehr als einem Dotierstoff zur Herstellung von co-dotiertem Quarzglas wird eine Verfahrensweise bevorzugt, bei der der pH-Wert der Dispersion zunächst so eingestellt ist, dass die Dotierstoffe in der Dispersion gelöst sind. Durch eine Erhöhung des pH-Wertes kommt es dann vorzugsweise zu einem Ausfallen der Dotierstoff-Teilchen. Je nach den spezifischen Löslichkeitsprodukten der Dotierstoffe kann es dabei zu einer zeitlich gestaffelten Ausfällung der Dotierstoffe kommen.

In einer bevorzugten Ausführungsform des erfindungsgemäßen Verfahrens wird eine inhomogene Verteilung der Dotierstoffe dadurch vermieden, dass die Erhöhung des pH-Wertes durch eine Erhöhung der Temperatur der Dispersion herbeigeführt wird, indem eine bei niedrigerer Temperatur in der Dispersion als Säure wirkende Verbindung durch Erhöhung der Temperatur unter Freisetzung einer in der Dispersion als Base wirkenden Substanz zersetzt wird.

Dabei erfolgt die thermische Zersetzung der als Säure wirkenden Verbindung bevorzugt gleichzeitig und gleichmäßig innerhalb des Volumens der Dispersion. Dadurch werden lokale Übersättigungen und damit einhergehende Konzentrationsunterschiede der Dotierstoffverteilung vermieden.

In einer bevorzugten Ausführungsform des erfindungsgemäßen Verfahrens ist die bei niedrigeren Temperaturen als Säure und bei erhöhter Temperatur als Base in der Dispersion wirkende Verbindung Hexamethylentetramin (Urotropin).

Um eine homogene Fällungsreaktion zu gewährleisten, beträgt der Feststoffgehalt der Dispersion bei der Fällung des/der Dotierstoffe(s) vorzugsweise weniger als 80 Gew.-%, besonders bevorzugt weniger als 60 Gew.-%, speziell weniger als 40 Gew.-%, jeweils bezogen auf das Gesamtgewicht der Dispersion.
Erfindungsgemäß erfolgt die Reduzierung der Menge der flüssigen Phase der Dispersion in Schritt c) unter Ausbildung eines dotierten Zwischenproduktes. Als flüssige Phase im Sinne der vorliegenden Erfindung ist dabei eine Phase zu verstehen, die bei 20 °C flüssig ist und die vorzugsweise wässrig ist.
Vorzugsweise wird die Reduzierung der flüssigen Phase der Dispersion im erfindungsgemäßen Verfahren bis zur Ausbildung eines festen Zwischenproduktes betrieben. Vorzugsweise erfolgt die Reduzierung der flüssigen Phase der Dispersion im Rahmen einer Granulation.

Die Granulation der Dispersion erfolgt bevorzugt nach bekannten Standardverfahren, wie der Rollgranulation, Sprühgranulation, Zentrifugalzerstäubung, Wirbelschichtgranulation, Rotationsverdampfer-Granulation oder Frostgranulation. Andere Granulationsverfahren unter Einsatz einer Granuliermühle, durch Kompaktierung, Walzenpressen, Brikettierung oder Extruierung sind ebenfalls nicht ausgeschlossen. Diese Verfahren sind im Stand der Technik beschrieben und dem Fachmann bekannt. Das Resultat des Granulationsprozesses ist ein Zwischenprodukt in Form von SiO₂-Pulver, SiO₂-Granulat oder eines SiO₂-Grünkörpers, das den oder die Dotierstoffe oder eine Vorläufersubstanz eines Dotierstoffs in fein verteilter Form und in gleichmäßiger Verteilung enthält.

In einer bevorzugten Variante des erfindungsgemäßen Verfahrens geht der Reduzierung der flüssigen Phase der Dispersion ein Verfahrensschritt voraus, bei dem in der Dispersion enthaltener Feststoff und die Flüssigkeit mittels eines mechanischen Trennverfahrens separiert werden. Die mechanische Trennung erfolgt dabei im einfachsten Fall bevorzugt durch Zentrifugieren. Auf diese Weise lässt sich NH₄Cl, das in der Dispersion ebenfalls vorliegt, größtenteils entfernen, was Probleme durch die störende Anwesenheit des Salzes vermindert.

In einer bevorzugten Ausführungsform des erfindungsgemäßen Verfahrens erfolgt zwischen Schritt c) und d) ein Verfestigungsschritt unter Ausbildung eines Formkörpers, insbesondere durch ein zusätzliches Verpressen des dotierten Zwischenproduktes zu einem Pressling. Vorzugsweise weist der Pressling eine Dichte von 20 bis 65% der Dichte des Quarzglases auf. Bevorzugt ist die Dichte des Presslings so gewählt, dass ein optimales Eindringen von gasförmigen Fremdatomen bei gleichzeitigem Formerhalt des Presslings gewährleistet ist.

Vorzugsweise erfolgt der Verfestigungsschritt durch Verpressen und/oder thermische Formgebungsverfahren, wie beispielsweise Schlickergießen. Durch ein kontaminationsarmes Kompressionsverfahren kann die Reinheit des Formkörpers zu einem großen Teil erhalten werden. Dadurch lässt sich eine homogene Verteilung der Fremdatome im Formkörper, die mittels Gasphasendotierung eingebracht werden, erreichen. Die Verpressung erfolgt vorzugsweise uniaxial oder isostatisch. Durch das isostatische Verpressen lässt sich eine homogene Porenverteilung im Formkörper realisieren. Daher ist eine Ausführungsform des erfindungsgemäßen Verfahrens bevorzugt, bei dem der Verfestigungsschritt zwischen Schritt c) und d) durch isostatisches Verpressen erfolgt.

Erfindungsgemäß wird das dotierte Zwischenprodukt einer fluorhaltigen Atmosphäre ausgesetzt. Vorzugsweise wird das dotierte Zwischenprodukt dabei von einem Gas oder einer Gasmischung, das/die eine oder mehrere gasförmige Fluorquelle(n) enthält, durchspült, um ein fluoriertes Zwischenprodukt zu erzeugen. Dabei kann das Gas oder die Gasmischung neben der oder den gasförmigen Fluorquelle(n) zusätzlich Trägergase, wie beispielsweise He, Ar, O₂ und N₂, umfassen.

Als Fluorquelle im Rahmen der vorliegenden Erfindung ist eine Fluor-haltige Verbindung zu verstehen, die unter den Prozessbedingungen das gasförmige Fluorierungsmittel freisetzt. Dabei kann die Fluor-haltige Verbindung unter Normalbedingungen bereits gasförmig sein oder sie wird während des Fluorierungsprozesses verdampft.

In einer bevorzugten Ausführungsform des erfindungsgemäßen Verfahrens ist die gasförmige Fluorquelle ausgewählt aus der Gruppe bestehend aus organischen Fluorhaltigen Gasen, anorganischen Fluor-haltigen Gasen und bei 25°C flüssigen, aber unter Verfahrensbedingungen verdampfbaren Fluor-haltigen Verbindungen, insbesondere ausgewählt aus der Gruppe bestehend aus Siliziumfluorverbindungen, Fluorkohlenstoffen, Fluorwasserstoff, Stickstofffluoriden, Schwefelfluoriden, Metallfluoriden, Fluorkohlenwasserstoffen und Fluorchlorkohlenwasserstoffen.
Vorzugsweise ist die gasförmige Fluorquelle ausgewählt aus der Gruppe bestehend aus SiF₄, CF₄, SF₄, SF₆, NF₃, HF, C₂F₆ und Hexafluordisiloxan (Si₂OF₆).

Besonders bevorzugt wird eine Mischung aus mehreren unterschiedlichen Fluorhaltigen und nicht Fluor-haltigen Gasen als Fluorquelle verwendet. Dabei wird die Zusammensetzung vorzugsweise so gewählt, dass die gewünschten Effekte, die durch die Fluorierung erzielt werden sollen, verstärkt und optimiert werden.

Vorzugsweise enthält das Gas oder die Gasmischung, mit dem/der das dotierte Zwischenprodukt behandelt wird, eine oder mehrere gasförmige Fluorquelle(n) in einer Menge von 0.1 bis 100 Vol.-%, vorzugsweise 5 bis 50 Vol.-%, insbesondere 10 bis 20 Vol.-%, jeweils bezogen auf das Gesamtvolumen des Gases oder der Gasmischung.

Eine bevorzugte Ausführungsform des erfindungsgemäßen Verfahrens zeichnet sich dadurch aus, dass der Partialdruck der gasförmigen Fluorquelle zwischen 10⁻³ und 10000 mbar, bevorzugt zwischen 10 und 5000 mbar, insbesondere zwischen 20 und 1100 mbar, beispielsweise 50 bis 1000 mbar, beträgt. In einer besonders bevorzugten Ausführungsform entspricht der Partialdruck der gasförmigen Fluorquelle dem Atmosphärendruck.

In einer weiteren bevorzugten Ausführungsform findet die Behandlung des dotierten Zwischenproduktes mit einem Gas, das eine gasförmige Fluorquelle umfasst, bei Temperaturen zwischen 300 °C und 1500 °C, vorzugsweise zwischen 600 °C und 1200 °C, insbesondere zwischen 800 °C und 1000 °C, statt.

Vorzugsweise erfolgt die Behandlung des dotierten Zwischenproduktes in Schritt d) mit der/den gasförmigen Fluorquelle(n) für eine Dauer von 1 bis 10000 Minuten, bevorzugt 50 bis 5000 Minuten, besonders bevorzugt 500 bis 3000 Minuten. Dabei hat es sich gezeigt, dass eine Behandlungsdauer von 1000 Minuten bis 3000 Minuten, beispielsweise 48 Stunden, besonders geeignet ist, um eine homogene Verteilung der Fluor-Ionen, die üblicherweise die Dotanden darstellen, zu erzielen. Die Behandlungsdauer ist vorzugsweise so gewählt, dass der gewünschte Fluorgehalt im dotierten Zwischenprodukt erreicht wird. Vorzugsweise ist die Dauer so gewählt, dass eine Schädigung des dotierten Zwischenproduktes durch Massenverluste oder Ätzprozesse vermieden wird.

In einer bevorzugten Ausführungsform des erfindungsgemäßen Verfahrens handelt es sich bei der Behandlung des dotierten Zwischenproduktes um ein Durchspülen mit einem Gas, welches eine gasförmige Fluorquelle beinhaltet, wobei die Durchflussrate des Gases vorzugsweise zwischen 0 sccm und 5000 sccm, bevorzugt im Bereich oberhalb 0 sccm und unterhalb 1000 sccm, besonders bevorzugt zwischen 10 sccm und 500 sccm, liegt.

Besonders bevorzugt ist eine Ausführungsform des erfindungsgemäßen Verfahrens bei dem die Behandlung des dotierten Zwischenproduktes mit der gasförmigen Fluorquelle in einer stehenden Gasatmosphäre (Durchflussrate = 0 sccm) erfolgt. Auf diese Weise lässt sich eine homogene Verteilung der gewünschten Fluormenge im dotierten Zwischenprodukt erreichen, da in diesem Fall die Fluorierung nicht von Gastransportprozessen beeinflusst wird.

Je nach Prozesstemperatur und -druck, Zusammensetzung des Gases, Art der Fluorquelle, Durchflussgeschwindigkeit und Dauer des Fluorierungsprozesses können unterschiedliche Fluorgehalte und unterschiedliche Fluorverteilungen und -profile im Quarzglas realisiert werden. Vorzugsweise sind die Fluorverteilung und der Fluorgehalt im dotierten Quarzglas so gewählt, dass das Quarzglas die gewünschten Eigenschaften aufweist.

Eine bevorzugte Ausführungsform des erfindungsgemäßen Verfahrens zeichnet sich dadurch aus, dass die Behandlung in Schritt d) in einer Reaktionskammer erfolgt. Vorzugsweise erfolgt die Behandlung durch gezielten Gaswechsel und/oder Druckwechsel oder durch Evakuierung und anschließender Beaufschlagung der Reaktionskammer, in der sich das dotierte Zwischenprodukt befindet, mit der gasförmigen Fluorquelle. Fluorrückstände in der Reaktionskammer können im weiteren Verlauf des Verfahrens zu unerwünschten Folgereaktionen und erheblichen Arbeitssicherheitsrisiken führen. Durch einen gezielten Gaswechsel in der Reaktionskammer werden störende Fluorrückstände vermieden, was sich positiv auf eine homogen Verteilung des Fluors im dotierten Zwischenprodukt auswirkt.
In einer bevorzugten Ausführungsform des erfindungsgemäßen Verfahrens erfolgt ein zusätzlicher Behandlungsschritt in einer chlorhaltigen Atmosphäre, wobei dieser Behandlungsschritt zwischen Schritt c) und d) und/oder zwischen Schritt d) und e), vorzugsweise zwischen Schritt d) und e) erfolgt.

Die chlorhaltige Atmosphäre umfasst vorzugsweise Cl₂-Gas, HCl-Gas, Schwefelchlorid oder eine andere chlorhaltige Verbindung. Es können auch Mischungen aus unterschiedlichen chlorhaltigen und nicht chlor-haltigen Gasen verwendet werden. Üblicherweise und bevorzugt werden meist Cl₂ oder HCl für die Behandlung eingesetzt.

Vorzugsweise erfolgt die Behandlung des dotierten Zwischenprodukts in der chlorhaltigen Atmosphäre bei Temperaturen zwischen 700 °C und 1200 °C, bevorzugt zwischen 800 °C und 1000 °C. Dabei beträgt die Dauer der Behandlung vorzugsweise 5 Minuten bis 20 Stunden, bevorzugt 1 Stunde bis 10 Stunden.

Dabei umfasst die Behandlung vorzugsweise weitere Trocknungs- und Reinigungsschritte. Es hat sich gezeigt, dass ein besonders effektives und rasches Trocknen der porösen SiO₂-Granulatkörper erreicht wird, wenn das SiO₂-Granulat in einer chlorhaltigen Atmosphäre getrocknet und gereinigt wird. Auf diese Weise lassen sich hohe Fluorkonzentrationen erreichen. Außerdem bewirkt die Behandlung in einer chlorhaltigen Atmosphäre, dass der OH-Gehalt weiter reduziert wird. Der geringe OH-Gehalt wirkt sich vorteilhaft sowohl auf die Blasenbildung während des Sinterns als auch die optische Dämpfung des Quarzglases bei den durch die OH-Absorption beeinflussten Lichtwellenlängen aus. Zusätzlich lassen sich durch das Trocknen bei hohen Temperaturen letzte Reste von NH₄Cl entfernen, dessen Anwesenheit sonst ebenfalls zu Blasenbildung während des Sinterns führt. Vorzugsweise liegt die Trocknungstemperatur oberhalb der Sublimationstemperatur von NH₄Cl, das auf diese Weise durch Sublimation entfernt wird. Bevorzugt erfolgt die Trocknung bei Temperaturen zwischen 150 °C und 400 °C, vorzugsweise zwischen 180 °C und 300 °C. Vorzugsweise ist der Temperaturbereich so gewählt, dass verbleibende Restfeuchte und NH₄Cl optimal entfernt werden.

In einer bevorzugten Ausführungsform kann das dotierte Zwischenprodukt zwischen der Reduzierung in Schritt c) und dem Fluorierungsschritt d) zusätzlich in einer chlorhaltigen Atmosphäre behandelt werden, um eine Trocknung und Reinigung des dotierten Zwischenproduktes zu erreichen.

Eine bevorzugte Ausführungsform des erfindungsgemäßen Verfahrens zeichnet sich dadurch aus, dass der durch die Verfestigung des dotierten Zwischenproduktes erhaltene Formkörper derart mit einem Gas oder einer Gasmischung, das/die eine oder mehrere gasförmige Fluorquelle(n) enthält, behandelt wird, dass ein fluoriertes Zwischenprodukt erzeugt wird, das einen Fluorkonzentrationsgradienten aufweist, bei dem die Fluorkonzentration des fluorierten Zwischenproduktes von außen nach innen abnimmt. Vorzugsweise wird die Dauer der Behandlung so gewählt, dass sich kein Gleichgewicht über das gesamte Volumen des Formkörpers einstellt. Auf diese Weise weist der Formkörper aufgrund des Diffusionsprofils an den Rändern eine höhere Fluorkonzentration als im Inneren des Formkörpers auf. Besonders bevorzugt ist eine Ausführungsform, bei der der Formkörper eine stabähnliche Form hat.

Der Fluorkonzentrationsgradient kann beispielsweise dadurch erzeugt werden, dass der Formkörper bzw. die Reaktionskammer, in der sich der Formkörper befindet unter Druckminderung evakuiert wird. Anschließend kann die Reaktionskammer mit der gasförmigen Fluorquelle geflutet werden. Auf diese Weise erhält man einen Formkörper, der in den Randbereichen eine höhere Fluorkonzentration aufweist als in der Mitte. So ist es möglich, durch gezielten Fluoreinbau Gradienten-Index-Fasern zu erzeugen, die im multi-mode Betrieb besondere Lichtführungseigenschaften aufweisen.

Das erfindungsgemäße Verfahren umfasst einen Schritt, in dem das fluorierte Zwischenprodukt unter Ausbildung des dotierten Quarzglases gesintert wird. Das Sintern geschieht dabei vorzugsweise mit dem Fachmann bekannten Standardverfahren, wie der Flammenschmelze, dem Gasdrucksintern, dem Vakuumsintern, dem Sintern in einer Reaktivgasatmosphäre oder dem Sintern im Hüllrohr. Diese Verfahren haben den Vorteil, dass Blasenbildung, Verfärbungen und Kristallisationen im Quarzglas verhindert werden.

In einer bevorzugten Ausführungsform des erfindungsgemäßen Verfahrens wird das fluorierte Zwischenprodukt in einer Inertgasatmosphäre vorgesintert. Auf diese Weise lassen sich vorverdichtete Sinterkörper erhalten. Vorzugsweise erfolgt das Vorsintern in einer Inertgasatmosphäre, vorzugsweise in einer He-Atmosphäre. Dabei liegen die Temperaturen bevorzugt in einem Bereich zwischen 1100 °C und 1700 °C, besonders bevorzugt zwischen 1500 °C und 1700 °C.

Vorzugsweise erfolgt das Sintern des fluorierten Zwischenproduktes bei Temperaturen zwischen 1000 °C und 2000 °C, bevorzugt zwischen 1500 °C und 1800 °C. Der Druck beträgt dabei vorzugsweise 0,5 MPa bis 3,0 MPa, bevorzugt 1,0 Mpa bis 2,0 MPa.
In einer bevorzugten Ausführungsform des erfindungsgemäßen Verfahrens erfolgt das Verfahren zwingend im Ablauf der Schritte a) bis e).

In einer bevorzugten Ausführungsform des erfindungsgemäßen Verfahrens weist das gesinterte fluorierte Zwischenprodukt eine im Wesentlichen homogene Verteilung des Dotanden auf. Vorzugsweise variiert der gleitende Mittelwert der Verteilung des Dotanden um maximal 10%, vorzugsweise um maximal 8%, besonders bevorzugt um maximal 5%, sowohl in axialer als auch radialer Ausdehnung. Dabei sind Dotanden im Sinne der vorliegenden Erfindung Substanzen, die in Form von positiv geladenen Ionen vorliegen, wie beispielsweise die Kationen von Seltenen Erden. Um eine unklare Formulierung zu vermeiden und Verwirrung vorzubeugen, sei ausdrücklich darauf hingewiesen, dass Fluorid im Sinne der vorliegenden Erfindung nicht in diese Kategorie fällt, sondern immer explizit erwähnt wird.

Bevorzugt wird eine Ausführungsform des erfindungsgemäßen Verfahrens, bei dem der Dotand Ytterbium-Kationen umfasst. Dabei handelt es sich vorzugsweise um laseraktive Ytterbium-Kationen in Form von Yb³⁺.

Durch die Dotierung mit Fluor kann eine Senkung der Schmelztemperatur erreicht werden. Dadurch können thermisch bedingte Defekte im Quarzglas vermieden werden, da die Gläser bereits bei niedrigeren Temperaturen sintern. Auf diese Weise kann auch der unerwünschte Anteil an Yb²⁺, der beim Sintern von Yb₂O₃ dotiertem Quarzglas bei hohen Temperaturen und unter reduzierenden Bedingungen entsteht, herabgesetzt werden.

Dotiertes Quarzglas nimmt bei der Herstellung von optisch aktiven Bauteilen eine wichtige Rolle ein. Durch die gezielte Dotierung des Quarzglases können dessen Eigenschaften gezielt manipuliert werden. Auf der anderen Seite können unerwünschte Effekte, die durch die Dotierung entstehen, durch den Einbau weiterer Fremdatome wie Fluor kompensiert werden.

Ein weiterer Gegenstand der vorliegenden Erfindung ist dotiertes Quarzglas, das nach dem erfindungsgemäßen Verfahren erhältlich ist, wobei der Dotand im dotierten Quarzglas im Wesentlichen homogen verteilt ist und das dotierte Quarzglas Aluminium-Kationen umfasst, wobei die Fluoridkonzentration in dem dotierten Quarzglas oberhalb von 0,6 Mol-% liegt.

Das erfindungsgemäß erhaltene Fluor-dotierte Quarzglas weist einen konstanten Dotandenverlauf auf, der keine Ausdiffusionszonen im Zentrum oder im Randbereich zeigt, wie es bei mit Fluor dotiertem Quarzglas der Fall ist, das nach im Stand der Technik bekannten Standardverfahren hergestellt wurde. Dabei wurde überraschend gefunden, dass sich durch die Anwesenheit von Aluminiumionen der Gehalt an Fluor, der in das Quarzglas eingebracht wird, steigern lässt. Quarzglas, das nach dem in der Stand der Technik bekannten Verfahren hergestellt wird, kann nur bis zu einer bestimmten Menge mit Fluor dotiert werden, die oft nicht ausreichend ist, um beispielsweise die Anhebung der Brechzahl des Quarzglases durch andere Dotanten, insbesondere der Seltenen Erden, auszugleichen. Durch den höheren Gehalt an Fluor im Quarzglas, der durch das erfindungsgemäße Verfahren und insbesondere die Codotierung mit Aluminium erzielt wird, lässt sich dotiertes Quarzglas herstellen, das eine Brechungszahl analog der Brechungszahl von undotiertem Quarzglas aufweist, wobei die Fluoridkonzentration in dem dotierten Quarzglas oberhalb von 0,6 Mol-%, vorzugsweise oberhalb von 0,65 Mol-%, insbesondere zwischen 0,7 Mol-% und 2,5 Mol-% und besonders bevorzugt zwischen 0,8 Mol-% und 1,8 Mol-%, liegt, jeweils angegeben als Mol-% SiF₄.

In einer bevorzugten Ausführungsform weist das dotierte Quarzglas, das nach dem erfindungsgemäßen Verfahren erhältlich ist, einen Fluorkonzentrationsgradienten auf, bei dem die Fluorkonzentration im dotierten Quarzglas von außen nach innen abnimmt. Vorzugsweise weist das dotierte Quarzglas also in den Randbereichen eine höhere Fluorkonzentration auf als in der Mitte. Besonders bevorzugt wird dieses dotierte Quarzglas, das einen Fluorkonzentrationsgradienten aufweist, in Gradienten-Index-Fasern verwendet, die am Rand eine niedrigere Brechzahl aufweisen als in der Mitte.

Vorzugsweise weist das erfindungsgemäß erhältliche Quarzglas einen gleitenden Mittelwert des Dotandenverlaufs auf, der maximal um 10%, bevorzugt maximal um 8%, besonders bevorzugt maximal um 5%, variiert, sowohl in axialer als auch in radialer Ausdehnung.

Durch die Dotierung von Quarzglas mit Fluor lassen sich die Sintertemperaturen reduzieren, was sich wiederum vorteilhaft auf den Gehalt an unerwünschtem nicht laseraktiven Yb²⁺-Ionen im Quarzglas auswirkt. Diese entstehen aufgrund der hohen Sintertemperaturen und der reduzierenden Bedingungen während des Sintervorgangs aus den gewünschten, laseraktiven Yb³⁺-Kationen. Der Gehalt an Yb³⁺-Kationen spielt eine große Rolle bei der Bestimmung der optischen Eigenschaften des Quarzglases.

Daher ist eine Ausführungsform bevorzugt, bei der sich das dotierte Quarzglas dadurch ausweist, dass der Dotand Ytterbium-Kationen umfasst. Insbesondere bevorzugt ist eine Ausführungsform, bei der der Dotand Yb³⁺-Kationen umfasst.

Es wurde überraschend gefunden, dass Quarzglas, das nach dem erfindungsgemäßen Verfahren mit Seltenen Erden dotiert und zusätzlich fluoriert wurde, eine deutliche Verbesserung der Alterungsbeständigkeit zeigt. So konnte durch den zusätzlichen Einbau von Fluor das sogenannte Photodarkening, bei dem das Material während des Laserbetriebs nachdunkelt, d.h. bei dem die Materialgrunddämpfung zunimmt und damit die Lasereffizienz abnimmt, signifikant reduziert werden.

Daher wird das erfindungsgemäße Quarzglas in einer bevorzugten Ausführungsform zur Verringerung von Photodarkening-Effekten in laseraktiven Materialen verwendet. Dabei ist eine Ausführungsform des erfindungsgemäßen Quarzglases bevorzugt, die neben Fluorid auch Aluminium- und Ytterbium-Kationen umfasst. Besonders bevorzugt ist eine Mischung, bei der die Stoffmenge der Aluminiumkationen mindestens doppelt so hoch wie die Stoffmenge der Ytterbium-Kationen, bevorzugt mindestens dreimal so hoch und besonders bevorzugt mindestens viermal so hoch ist, jeweils bezogen auf die Gesamtmenge der Metalldotanden.

Aluminium und Ytterbium sind im Sinne der vorliegenden Erfindung stets als Dotanden zu verstehen, d.h. als das jeweilige Kation. Das Metall in neutraler Form ist mit dieser Bezeichnung im Sinne der Erfindung nicht erfasst.

Ebenfalls bevorzugt ist eine Ausführungsform in der das Quarzglas neben Aluminium und Fluor zusätzlich mit Phosphor dotiert ist.

Besonders bevorzugt ist eine Ausführungsform, bei der der Dotand Al³⁺-Kationen umfasst. Ebenfalls bevorzugt ist eine Ausführungsform, bei der der Dotand eine Mischung aus Aluminium und Ytterbium umfasst, wobei eine Ausführungsform besonders bevorzugt ist, bei der das Aluminium in einer Überschussmenge im Vergleich zur Menge des Ytterbiums vorliegt. Weiterhin bevorzugt ist eine Ausführungsform, bei der der Dotand ersetzend oder ergänzend zu den Aluminiumkationen auch Phosphorkationen umfasst.

Die meisten Dotanden, mit denen Quarzglas dotiert werden kann, führen zu einer Anhebung der Brechzahl des Quarzglases. Im Gegensatz dazu führt der Einbau von Fluorid zu einer Senkung der Brechzahl. Dadurch ergibt sich die Möglichkeit, durch die entsprechende Wahl der Codotanden, wie beispielsweise Aluminium oder Ytterbium, die Brechzahl des Quarzglases auf ein bestimmtes Niveau einzustellen.

Bei dem dotierten Quarzglas, das nach dem erfindungsgemäßen Verfahren erhältlich ist, handelt es sich vorzugsweise um laseraktives Quarzglas.

In einer bevorzugten Ausführungsform wird das nach dem erfindungsgemäßen Verfahren erhältliche Quarzglas als Anti-Guiding-Laserfaser verwendet. Als Anti-Guiding-Laserfasern im Sinne der vorliegenden Erfindung sind Strukturen zu verstehen, bei der der laseraktive Kern eine niedrigere Brechzahl als die Ummantelung aufweist und im Normalfall kein Licht führen würde. Dieser Laser, beispielsweise ein Faserlaser, kann durch hartes Pumpen dazu gebracht werden, dass der Kern doch lichtführend wird.

Mit Hilfe des erfindungsgemäßen Verfahrens lassen sich sowohl der Fluorgehalt als auch das Fluorprofil des Quarzglases gezielt einstellen. So können Vorformen und Fasern einer lichtführenden Struktur ohne weitere Vorform-Herstellungsschritte wie Überfangen oder Schichtabscheidung hergestellt werden. Daher wird in einer weiteren bevorzugten Ausführungsform das nach dem erfindungsgemäßen Verfahren erhältliche dotierte Quarzglas für die Herstellung von Vorformen und Fasern für die Erzeugung einer lichtführenden Struktur verwendet. Auf diese Weise lassen sich grenzflächenfreie Strukturen herstellen, die ein bestimmtes Brechzahlprofil aufweisen. Daher wird das erfindungsgemäße erhältliche Quarzglas in einer bevorzugten Ausführungsform insbesondere für Gradienten-Index-Fasern verwendet.

Durch den Einbau von Fremdatomen in das Quarzglas lassen sich dessen Eigenschaften gezielt steuern und beeinflussen. So lassen sich dispersionsoptimierte beziehungsweise dispersionsangepasste Gläser herstellen. Daher ist die Verwendung des nach dem erfindungsgemäßen Verfahren erhältlichen Quarzglases in optischen Anwendungen, insbesondere ausgewählt aus der Gruppe bestehend aus Filtergläser, Konvertergläsern, Linsen und Sensoren, bevorzugt.

Durch das erfindungsgemäße Verfahren lassen sich die Eigenschaften des Quarzglases, wie Spannung und Spleißbarkeit sowie die thermooptischen und thermodynamischen Ausdehnungskoeffizienten optimieren. Daher wird in einer bevorzugten Ausführungsform das nach dem erfindungsgemäßen Verfahren erhältliche Quarzglas für Faser-Endcaps verwendet. Aufgrund der optimierten thermooptischen und thermomechanischen Eigenschaften des erfindungsgemäßen Quarzglases wird die Fokusverschiebung, die normalerweise beim Erwärmen des Glases auftritt, minimiert.

Durch das erfindungsgemäße Verfahren lässt sich die Viskosität des Quarzglases anpassen. Das ist vor allem für laseraktive und laserpassive Spezialfasern interessant, bei denen die Viskosität des Kerns und des Mantels aufeinander abgestimmt sein soll. Daher ist eine bevorzugte Verwendung des nach dem erfindungsgemäßen Verfahren erhältlichen Quarzglases der Einsatz in Kern-Mantel-Glasfasern.

Nachfolgend wird die Erfindung anhand von Ausführungsbeispielen näher erläutert.

### Beispiel 1

### Teil A

Zur Herstellung eines mit Yb₂O₃ und Al₂O₃ dotierten Quarzglases wurde eine Suspension aus SiO₂-Nanopartikeln in Reinstwasser hergestellt. Durch Zugabe einer konzentrierten Ammoniaklösung wurde ein pH-Wert von 9,5 eingestellt. Der Feststoffgehalt der alkalischen Suspension lag bei 50 Gew.-%.

Der alkalischen Suspension wurden Dotierstoffe in gelöster Form und durch eine zeitlich gesteuerte, tropfenweise Zugabe einer wässrigen Dotierstofflösung aus AlCl₃ und YbCl₃ in einem Molverhältnis von 4:1 unter ständigem Rühren zugeführt. Die Zeitspanne zwischen aufeinanderfolgenden Zutropfungen der Dotierstofflösung wurde auf 1 Sekunde eingestellt, wodurch zu gewährleisten ist, dass jeder Tropfen in eine bereits homogenisierte Suspension gelangte.

Aufgrund des hohen pH-Wertes der Suspension kommt es unmittelbar zu einer Mischfällung von Hydroxiden der beiden Dotierstoffe in Form von Al(OH)₃ und Yb(OH)₃. Die so gebildeten Feststoffteilchen adsorbieren an den vorhanden Oberflächen der SiO₂-Teilchen und werden dadurch immobilisiert, so dass eine Koagulation der Feststoffteilchen oder eine Sedimentation verhindert wird. Auf diese Weise wird in der Suspension eine Dotierstoffkonzentration von 2 mol-% Al und 0.5 mol-% Yb eingestellt, jeweils bezogen auf den Si-Gehalt der Suspension.

Der Volumenanteil der Dotierstofflösung beträgt 20% des anfänglichen Volumens der Suspension. Während der Dotierung wird der vorab eingestellt pH-Wert der Suspension durch einen Überschuss an Ammoniak in der Suspension sowie erforderlichenfalls durch weitere Zugabe von Ammoniak und Reinstwasser konstant gehalten, um ungleiche Bedingungen bei der chemischen Fällung der Dotanden und eine Gelierung der Suspension zu vermeiden. Die Hydroxidverbindungen der Dotanden werden auf diese Art und Weise in der Suspension homogen verteilt. Die Suspension wurde kontinuierlich gerührt.

Anschließend wurde die mit dem Dotierstoff versehene Suspension in einem Rotationsverdampfer granuliert. Dabei wurde der Suspension die Feuchtigkeit durch Wärmeentwicklung sehr schnell entzogen. In dem so hergestellten, porösen SiO₂-Granulat waren somit fein und homogen verteilte Al(OH)₃- und Yb(OH)₃-Teilchen in einer Menge enthalten, die in der oxidischen Form eine Dotierung des Quarzglases mit 1 mol-% Al₂O₃ und 0.25 mol-% Yb₂O₃ bewirken.

Das SiO₂-Granulat wurde bei 200 °C während einer Dauer von 24 Stunden in einer Sauerstoffatmosphäre vorbehandelt. Dabei wurden die Restfeuchte und NH₄Cl entfernt. Anschließend wurde das Granulat bei einem Druck von 100 MPa isostatisch zu Presslingen verarbeitet. Die so hergestellten Presslinge wurden in einem Trockenschrank thermisch getrocknet.

### Teil B

Die in Teil A erhaltenen Presslinge wurden für die Dauer von 9 Stunden bei 900 °C einer Atmosphäre von 20 Vol.-% SiF₄ und 80 Vol.-% N₂ mit einem Gesamt-Gasdurchfluss von 100 sccm ausgesetzt.

Anschließend wurden die fluorierten Presslinge bei einer Temperatur von 900 °C 5 Stunden einer chlorhaltigen Atmosphäre ausgesetzt. Danach wurden die Presslinge bei 1600 °C im selben Ofen unter einer He-Atmosphäre vorgesintert. Dabei entstanden vorverdichtete Sinterkörper.

Die vorverdichteten Sinterkörper wurden zuerst unter Vakuum auf 1740 °C aufgeheizt und anschließend bei derselben Temperatur bei einem Druck von 1,5 MPa verglast.

### Beispiel 2

Ein Pressling wird entsprechend dem in Beispiel 1 Teil A beschriebenen Verfahren so eingestellt, das die Dotierung 3 Mol-% Al₂O₃ und 0,15 Mol-% Yb₂O₃ beträgt. Der Pressling mit einer Dichte von 50% der theoretischen Dichte von Quarzglas und einem Außendurchmesser von 18 mm sowie einer Länge von 65 mm wird in eine Quarzglashüllrohr gebracht und das Hüllrohr wird evakuiert. Anschließend wird das Hüllrohr mit SiF₄ und He mit einem Partialdruck von 500 mbar, bezogen auf den Fluorträger SiF₄, beaufschlagt. Das Hüllrohr wurde von außen mit einem Knallgasbrenner beheizt bis eine Temperatur von 1200 °C am Außenrohr erreicht war. Die Beheizung entlang des Rohres wurde durch die Bewegung des Brenners entlang der Rohrachse mit einer Geschwindigkeit von 1 cm pro Minute realisiert. Aufgrund des auftretenden Temperaturgradientens entlang des Radius des Presslings wird eine unterschiedliche Reaktivität des SiF₄ mit dem Pressling eingestellt, die sich in einer unterschiedlichen Konzentration des Fluors widerspiegelt, wobei die Verteilung der Dotanden Al und Yb konstant bleibt.

### Beispiel 3

Ein mit 4,5 Mol-% Al₂O₃ dotierter Pressling wurde entsprechend dem in Beispiel 1 Teil A beschriebenen Verfahren hergestellt. Der Pressling besaß einen Durchmesser von 18 mm und eine Länge von 50 mm. Der Pressling wurde in einen Reaktor eingebracht, der evakuiert und anschließend mit SiF₄ beladen wurde. Der Pressling wurde 3 Stunden bei 900 °C behandelt. Dabei wurde ein konstanter Gasfluss von 50 sccm SiF₄ aufrechterhalten. Anschließend wurde der Körper im Quarzglashüllrohr mit Hilfe eines Brenners simultan gesintert und verglast.

### Beispiel 4 (Einstellung eines Brechzahlprofils)

Ein Pressling mit einem Durchmesser von 4,0 cm, einer Länge von 15 cm und einer Grünlingsdichte von 45% verglichen mit der theoretischen Dichte von Quarzglas wurde für 45 Minuten bei einer Temperatur von 900 °C mit einer Gasmischung aus 20 Vol.-% C₂F₆ und 80 Vol.-% Stickstoff fluoriert, wobei die Gesamtströmungsgeschwindigkeit 50 cm³ pro Minute betrug. Das Glas wurde bei einer Temperatur von 1600 °C im Vakuum verglast und auf der Glasmacherdrehbank bei 1900 °C zu einem Stab von 20 mm Länge gestreckt.

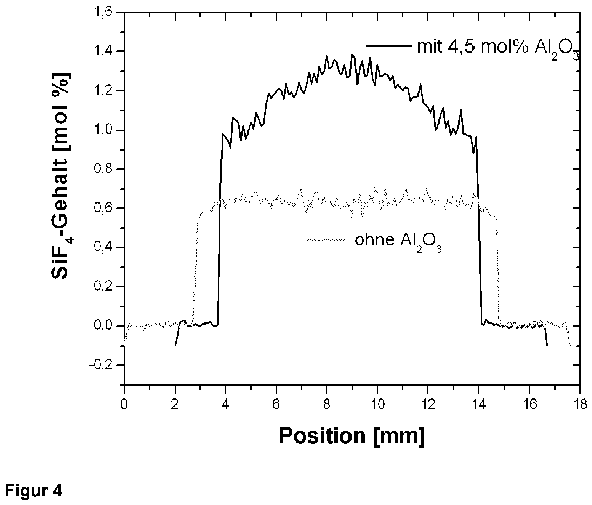

Figurenbeschreibung:

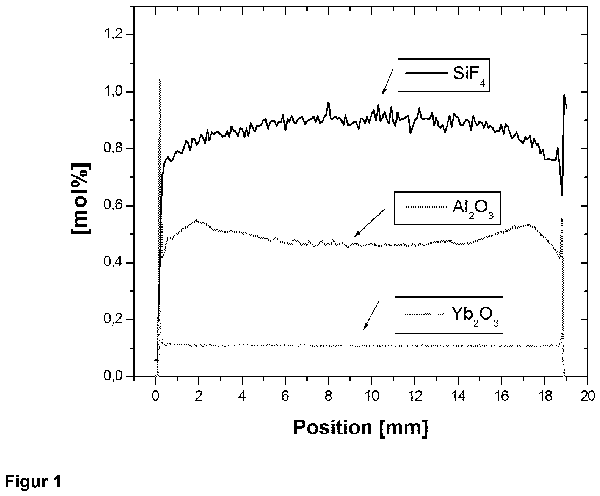

Figur 1 zeigt eine ESMA-Analyse mittels WDX-Scan über eine Yb/Al-dotierte Quarzglasprobe, die nach dem erfindungsgemäßen Verfahren gemäß Beispiel 1 hergestellt wurde. Die Probe zeigt ein sehr homogenes Yb₂O₃-Profil ohne Ausdiffusionszone im Randbereich oder im Zentrum. Auch nach einem zusätzlichen intensiven Heißbearbeitungsschritt tritt im Wesentlichen keine Ausdiffusion der Dotanden auf. Wie Figur 1 zeigt, tritt in den Randbereichen keine Verarmung an Yb₂O₃ auf, die üblicherweise bei mit Seltenen Erden dotierten MCVD-Materialien beobachtet wird, die mit Fluor codotiert werden.

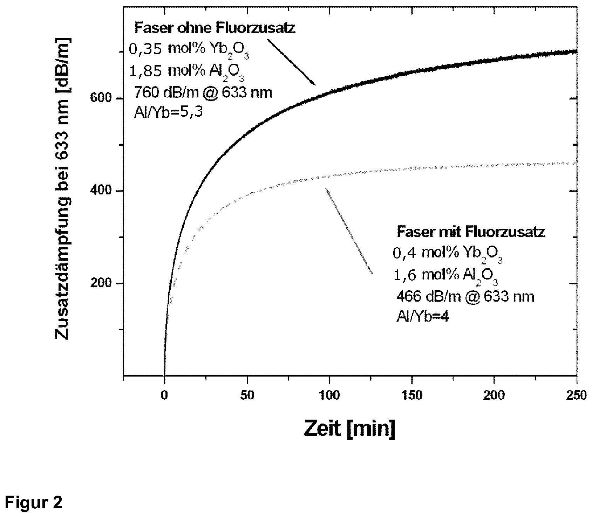

Figur 2 zeigt den Vergleich zweier Fasern mit ähnlicher Yb- und Al-Konzentration, von denen die Fluorid-enthaltende Faser gemäß dem erfindungsgemäßen Verfahren hergestellt wurde. Anhand der bisher bekannten Abhängigkeiten des Photodarkeningverhaltens von dotiertem Quarzglas hätte man erwartet, dass die Fluor-codotierte Faser ein höheres Photodarkeningverhalten aufweist als die fluorfreie Faser, da in der Fluor-dotierten Faser zum einen der Yb-Gehalt höher und zum anderen das Al/Yb-Verhältnis niedriger ist, alles Merkmale eines erhöhten Photodarkening. Wie der Abbildung zu entnehmen ist, wird das Photodarkening durch die Fluor-Codotierung signifikant reduziert. Je nach Fluorgehalt sowie dem Verhältnis an Al- und Yb-Ionen kann das Photodarkening um bis zu ein Drittel reduziert werden, im Vergleich zu Gläsern, die kein Fluor enthalten.

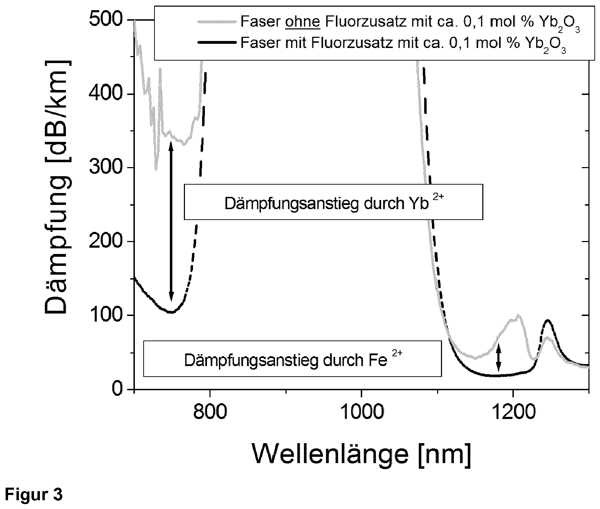

Figur 3 zeigt ein Faserdämpfungsspektrum eines Glases, das nach dem erfindungsgemäßen Verfahren hergestellt wurde. Zum Vergleich dient das Spektrum eines Glases mit dem gleichen Yb₂O₃-Gehalt, allerdings ohne Fluor-Codotierung. Wie dem Bereich für Wellenlängen über 800 nm des Spektrums zu entnehmen ist, kann durch eine Fluordotierung des Quarzglases eine Gelbfärbung des Glases deutlich unterdrückt werden. Die Gelbfärbung lässt sich auf eine zunehmende Anzahl an Yb²⁺ Ionen zurückführen, die zu einem Anstieg der Dämpfung im blauen Spektralbereich führen. Durch die Fluordotierung wird trotz der reduzierenden Sinterbedingungen so gut wie kein Yb²⁺ in die Glasmatrix eingebaut. Folglich verbessert sich die Transmission der Gläser im blauen Spektralbereich, bzw. die Dämpfung in diesem Spektralbereich sinkt.
   Es wurde weiterhin überraschend gefunden, dass durch die Fluordotierung die Fe²⁺-Kontamination im Glas maskiert wird. Fe²⁺ zeichnet sich durch eine breitbandige Absorption im Bereich zwischen ca. 1100 nm und 1200 nm aus. In den Fluor-dotierten Gläsern wird diese Bande deutlich reduziert, da die Fe-Kontaminationen durch das Fluor maskiert werden, wie in Abbildung 3 für den Wellenlängenbereich von ca. 1100 nm bis ca. 1200 nm zu sehen ist.
   Zusätzlich wurde gefunden, dass sich mit Hilfe des erfindungsgemäßen Verfahrens deutlich mehr Fluor in Al-dotierte Materialien einbauen lässt als in undotiertes Quarzglas. Entgegen den bisherigen Erfahrungen bei aluminiumdotierten und seltenerddotierten Quarzgläsern zeigt sich bei der Fluorierung mittels des erfindungsgemäßen Verfahrens, dass bis zum Faktor 2 mehr Fluor als in undotiertes Material unter identischen Versuchsbedingungen eingebaut werden kann. Figur 4 zeigt zwei Proben, von denen eine nur mit Fluor dotiert ist, während die andere nach dem erfindungsgemäßen Verfahren hergestellt wurde und 4,5 Mol-% Al₂O₃ enthält. Wie der Figur 4 zu entnehmen ist, wurde in die Al-codotierte Probe, insbesondere im zentralen Bereich, deutlich mehr Fluor eingebaut als in die undotierte.

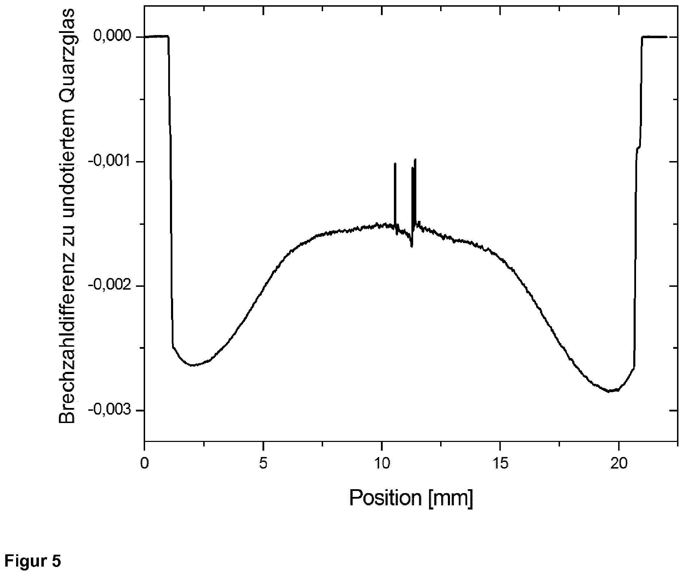

Figur 5 zeigt ein Brechzahlprofil eines gemäß Beispiel 4 hergestellten Quarzglases. Wie der Figur zu entnehmen ist, lässt sich durch die zeitlich gesteuerte Fluorierung des Quarzglases dessen Brechzahlprofil so modifizieren, dass das Quarzglas in den Randbereichen eine niedrigere Brechzahl als im Zentrum aufweist. Durch die Fluorierung von Quarzglas wird dessen Brechzahl gesenkt, was im Gegensatz zu den meisten anderen Dotanden steht, deren Einbau die Brechzahl des Quarzglases anhebt. Je größer die Menge an Fluorid im Quarzglas desto geringer ist dessen Brechzahl. Durch den in diesem Falle zeitlich gesteuerten Einbau von Fluorid in das Quarzglas lässt sich ein Brechzahlprofil einstellen, das den individuellen Anforderungen der jeweiligen Situation angepasst werden kann.

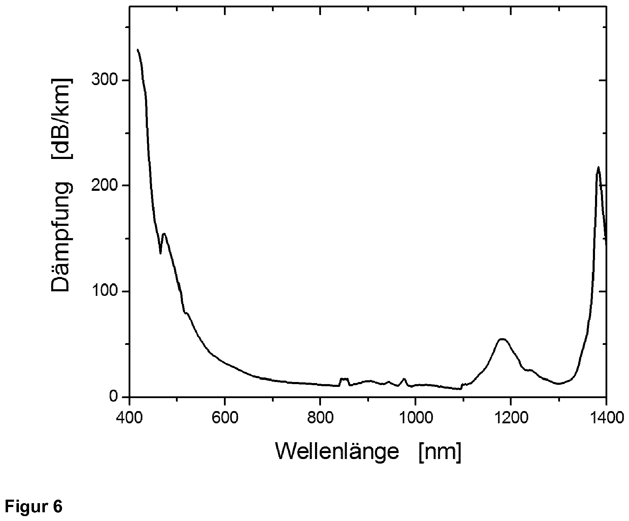

Figur 6 zeigt ein das Dämpfungsspektrum eines gemäß Beispiel 4 hergestellten Quarzglases, aus dem ohne weitere Ummantelungsschritte eine Faser mit 125 µm Außendurchmesser bei einer Ziehtemperatur von 1850 °C und einer Ziehgeschwindigkeit von 10 m/min hergestellt wurde. Zum mechanischen Schutz wurde die Faser mit Acrylat beschichtet. Die Dämpfung ist im Spektralbereich als niedrig anzusehen, lediglich im Bereich um 1200 und 1350 nm sind Absorptionsbanden von OH-Verunreinigungen zu beobachten, die sich in der Regel durch die Einführung eines Chlorierungsschritts leicht entfernen lassen. Wie die Abbildung zeigt, kann ein erfindungsgemäß erhältliches Quarzglas über die kontrollierte Reaktion mit Fluor zu einer Faser mit einer lichtführenden Struktur verarbeitet werden und Grenzflächen bei der Herstellung der lichtführenden Struktur sind nicht nötig.

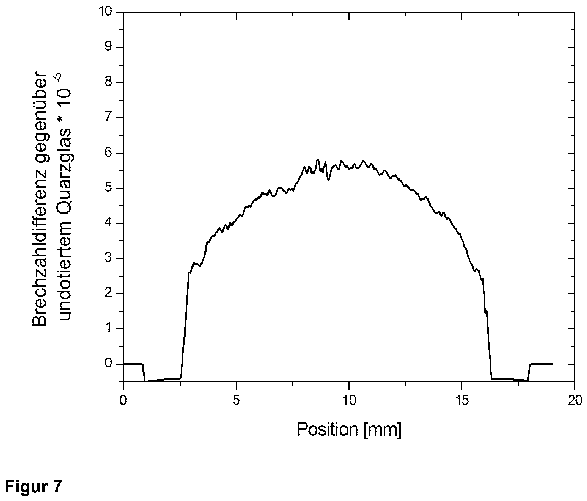

Figur 7 zeigt das Brechzahlprofil eines gemäß Beispiel 2 hergestellten Quarzglases. Der Gradienten-Index des Profils wurde durch eine gesteuerte F-Dotierung realisiert. Da Fluor die Brechzahl des Quarzglases senkt, weist es an Stellen mit einer höheren Fluoridkonzentration, wie in den Randbereichen, eine niedrigere Brechzahl als im Zentrum auf. Auf diese Weise wurde der parabelförmige Verlauf des Brechzahlprofils im Quarzglas realisiert.

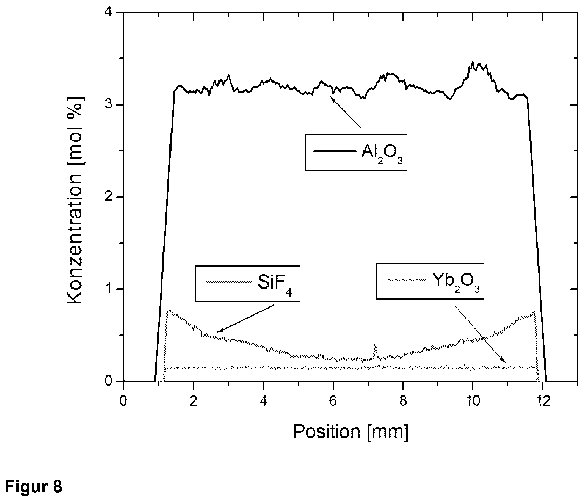

Figur 8 gibt die Elementverteilung bestimmt mittels Elektronenstrahlmikroskopie eines gemäß Beispiel 2 hergestellten Quarzglases wieder. Wie der Figur zu entnehmen ist, hat der Gradientenverlauf der Fluoridkonzentration keinen Einfluss auf die Konzentrationsverteilung der Dotanden Aluminium und Ytterbium.

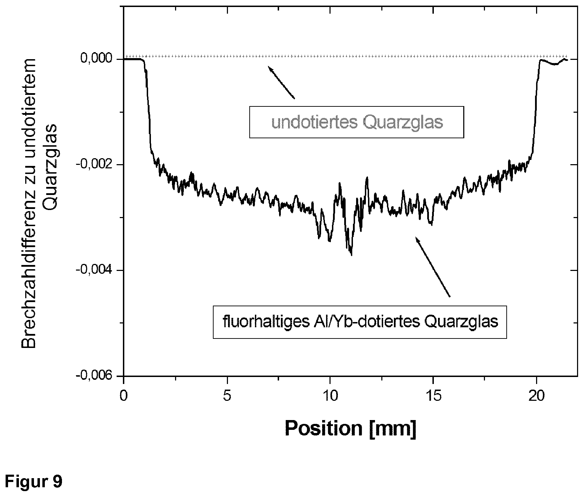

Figur 9 zeigt die Brechzahlstruktur eines entsprechend Beispiel 1 hergestellten Quarzglases, das mit 0,12 Mol-% Yb₂O₃, 0,5 Mol-% Al₂O₃ und 0,8 Mol-% SiF₄ dotiert ist, mit einer starken Brechzahlabsenkung gegenüber undotiertem Quarzglas, geeignet zur Herstellung einer Anti-Guiding-Laserfaser. In diesem Glas wurde der Fluorgehalt so eingestellt, das ein typischer Brechzahlunterschied von ca. 10⁻³ zu undotiertem Quarzglas resultiert, allerdings nun mit negativem Vorzeichen. Bei der Kombination dieses Glases mit undotiertem Quarzglas lässt sich in einfacher Weise eine sogenannte Anti-Guiding-Struktur realisieren, welche das Potential hat, unter bestimmten Anregungsbedingungen Laserlicht zu erzeugen.

## Patentansprüche

1. Verfahren zur Herstellung von dotiertem Quarzglas, umfassend folgende Schritte:
a) Bereitstellen einer Dispersion die
1) SiO₂-Teilchen und
2) eine Komponente ausgewählt aus der Gruppe bestehend aus einem Dotierstoff und einer Vorläufersubstanz eines Dotierstoffs sowie beliebige Mischungen hiervon,
in einer Flüssigkeit enthält,
b) Erzeugen eines Präzipitats von mindestens einem Teil des Dotierstoffs und/oder der Vorläufersubstanz eines Dotierstoffs in der Dispersion,
c) Reduzierung der Menge der flüssigen Phase der Dispersion unter Ausbildung eines dotierten Zwischenproduktes,
d) Behandlung des dotierten Zwischenproduktes mit einem Gas oder einer Gasmischung, das/die eine oder mehrere gasförmige(n) Fluorquelle(n) enthält/enthalten, unter Erzeugung eines fluorierten Zwischenproduktes,
e) Sintern des fluorierten Zwischenproduktes unter Ausbildung des dotierten Quarzglases.

2. Verfahren gemäß Anspruch 1, **dadurch gekennzeichnet, dass** die gasförmige Fluorquelle ausgewählt ist aus der Gruppe bestehend aus organischen Fluorhaltigen Gasen, anorganischen Fluor-haltigen Gasen und bei 25 °C flüssigen, aber unter Verfahrensbedingungen verdampfbaren Fluor-haltigen Verbindungen, insbesondere ausgewählt aus der Gruppe bestehend aus Siliziumfluorverbindungen, Fluorkohlenstoffen, Fluorwasserstoff, Stickstofffluoriden, Schwefelfluoriden, Metallfluoriden, Fluorkohlenwasserstoffen und Fluorchlorkohlenwasserstoffen.

3. Verfahren gemäß den Ansprüchen 1 oder 2, **dadurch gekennzeichnet, dass** die gasförmige Fluorquelle ausgewählt ist aus der Gruppe bestehend aus SiF₄, CF₄, SF₄, SF₆, NF₃, HF, C₂F₆ und Hexafluordisiloxan (Si₂OF₆).

4. Verfahren gemäß einem oder mehrerer der Ansprüche 1 bis 3, **dadurch gekennzeichnet, dass** der Partialdruck der gasförmigen Fluorquelle zwischen 10⁻³ und 10000 mbar, bevorzugt zwischen 10 und 5000 mbar, insbesondere zwischen 20 und 1100 mbar, beispielsweise 50 bis 1000 mbar, beträgt.

5. Verfahren gemäß einem oder mehrerer der Ansprüche 1 bis 4, **dadurch gekennzeichnet, dass** das dotierte Zwischenprodukt in Schritt d) für eine Dauer von 1 bis 10000 Minuten, bevorzugt 50 bis 5000 Minuten, besonders bevorzugt von 500 bis 3000 Minuten, mit der/den gasförmigen Fluorquelle(n) behandelt wird.

6. Verfahren gemäß einem oder mehrerer der Ansprüche 1 bis 5, **dadurch gekennzeichnet, dass** die Behandlung in Schritt d), die in einer Reaktionskammer erfolgt, durch gezielten Gaswechsel und/oder Druckwechsel oder durch Evakuierung der Reaktionskammer und anschließender Beaufschlagung der Reaktionskammer, in der sich das dotierte Zwischenprodukt befindet, mit der gasförmigen Fluorquelle erfolgt.

7. Verfahren gemäß einem oder mehrerer der Ansprüche 1 bis 6, **dadurch gekennzeichnet, dass** als Dotierstoff und/oder ihrer Vorläufersubstanzen ein oder mehrere Oxide der Seltenen Erden verwendet wird/werden.

8. Verfahren gemäß einem oder mehrerer der Ansprüche 1 bis 7, **dadurch gekennzeichnet, dass** die Bereitstellung der Dispersion in Schritt a) dadurch erfolgt, dass der/die Dotierstoff(e) und/oder seine/ihre Vorläufersubstanz(en) SiO₂-Teilchen, die in einer Flüssigkeit vorliegen, tropfenweise und/oder mittels Sprühnebelverfahren zugeführt wird/werden.

9. Verfahren gemäß einem oder mehrerer der Ansprüche 1 bis 8, **dadurch gekennzeichnet, dass** zusätzlich ein Behandlungsschritt in einer chlorhaltigen Atmosphäre erfolgt, wobei dieser Behandlungsschritt zwischen Schritt c) und d) und/oder zwischen Schritt d) und e), vorzugsweise zwischen Schritt d) und e), erfolgt.

10. Verfahren gemäß einem oder mehrerer der Ansprüche 1 bis 9, **dadurch gekennzeichnet, dass** zwischen Schritt c) und d) ein Verfestigungsschritt unter Ausbildung eines Formkörpers, insbesondere durch zusätzliches Verpressen des dotierten Zwischenproduktes unter Ausbildung eines Presslings, erfolgt.

11. Verfahren gemäß einem oder mehreren der Ansprüche 1 bis 10, **dadurch gekennzeichnet, dass** der Dotand Ytterbium-Kationen umfasst.

12. Dotiertes Quarzglas erhältlich nach einem Verfahren gemäß einem oder mehrerer der Ansprüche 1 bis 11, wobei der Dotand im dotierten Quarzglas im Wesentlichen homogen verteilt ist und das dotierte Quarzglas Aluminium-Kationen umfasst, **dadurch gekennzeichnet, dass** die Fluoridkonzentration in dem dotierten Quarzglas oberhalb von 0,6 Mol-% liegt.

13. Dotiertes Quarzglas gemäß Anspruch 12, **dadurch gekennzeichnet, dass** es einen Fluorkonzentrationsgradienten aufweist, bei dem die Fluorkonzentration im dotierten Quarzglas von außen nach innen abnimmt.

14. Verwendung des dotierten Quarzglases gemäß einem oder mehreren der Ansprüche 12 und 13, zur Verringerung des Photodarkenings in Laser-aktiven Materialen.

15. Verwendung des Quarzglases gemäß einem oder mehrerer der Ansprüche 12 und 13 als Anti-Guiding-Laserfasern.

16. Verwendung des Quarzglases gemäß einem oder mehrerer der Ansprüche 12 und 13 zur Herstellung von Vorformen und Fasern zur Erzeugung einer lichtführenden Struktur, insbesondere Gradienten-Index-Fasern.

17. Verwendung des Quarzglases gemäß einem oder mehrerer der Ansprüche 12 und 13 für Faser-Endcaps oder in Kern-Mantel-Glasfasern.

## Claims

1. Method for the manufacture of doped quartz glass, comprising the following steps of:
a) providing a dispersion containing
1) SiO₂ particles and
2) a component selected from the group consisting of a doping agent and a precursor substance of a doping agent and any mixture thereof,
in a liquid;
b) generating a precipitate of at least a part of the doping agent and/or precursor substance of a doping agent in the dispersion;
c) reducing the amount of the liquid phase of the dispersion while forming a doped intermediate product;
d) treating the doped intermediate product with a gas or a gas mixture that contains one or more gaseous fluorine source(s) while generating a fluorinated intermediate product;
e) sintering the fluorinated intermediate product while forming the doped quartz glass.

2. Method according to claim 1, **characterised in that** the gaseous fluorine source is selected from the group consisting of organic fluorine-containing gases, inorganic fluorine-containing gases and fluorine-containing compounds that are liquid at 25 °C, but can be evaporated at process conditions, specifically selected from the group consisting of silicon-fluorine compounds, fluorocarbons, hydrogen fluoride, nitrogen fluorides, sulphur fluorides, metal fluorides, fluoro-hydrocarbons, and chlorofluorohydrocarbons.

3. Method according to claims 1 or 2, **characterised in that** the gaseous fluorine source is selected from the group consisting of SiF₄, CF₄, SF₄, SF₆, NF₃, HF, C₂F₆, and hexafluorodisiloxane (Si₂OF₆).

4. Method according to any one or more of the claims 1 to 3, **characterised in that** the partial pressure of the gaseous fluorine source is between 10⁻³ and 10,000 mbar, preferably between 10 and 5,000 mbar, in particular between 20 and 1,100 mbar, for example 50 to 1,000 mbar.

5. Method according to any one or more of the claims 1 to 4, **characterised in that** the doped intermediate product is treated with the gaseous fluorine source(s) in step d) for duration of 1 to 10,000 minutes, preferably 50 to 5,000 minutes, particularly preferably 500 to 3,000 minutes.

6. Method according to any one or more of the claims 1 to 5, **characterised in that** the treatment in step d) in a reaction chamber takes place by means of a specific change of gas and/or change of pressure or through evacuation and subsequent application of the gaseous fluorine source to the reaction chamber, in which the doped intermediate product is situated.

7. Method according to any one or more of the claims 1 to 6, **characterised in that** the one or more oxides of rare earth elements is/are used as doping agent and/or precursor substance of the doping agent.

8. Method according to any one or more of the claims 1 to 7, **characterised in that** providing the dispersion in step a) takes place by SiO₂ particles present in a liquid being added to the doping agent(s) and/or the precursor substance(s) thereof in the form of droplets and/or through a spray mist method.

9. Method according to any one or more of the claims 1 to 8, **characterised in that** an additional treatment step takes place in a chlorine-containing atmosphere, whereby said treatment step takes place between steps c) and d) and/or between steps d) and e), preferably between steps d) and e).

10. Method according to any one or more of the claims 1 to 9, **characterised in that** a solidification step during which a form body is formed takes place between steps c) and d), in particular through an additional step of compacting the doped intermediate product while forming a pellet.

11. Method according to any one or more of the claims 1 to 10, **characterised in that** the dopant comprises ytterbium cations.

12. Doped quartz glass obtainable according to a method according to any one or more of the claims 1 to 11, whereby the dopant is distributed essentially homogeneously in the doped quartz glass and the doped quartz glass comprises aluminium cations, **characterised in that** the fluoride concentration of the doped quartz glass is higher than 0.6 mol-%.

13. Doped quartz glass according to claim 12, **characterised in that** it comprises a fluorine concentration gradient, in which the fluorine concentration in the doped quartz glass decreases from outside towards inside.

14. Use of the doped quartz glass according to any one or more of the claims 12 and 13 for reducing the photo-darkening in laser-active materials.

15. Use of the quartz glass according to any one or more of the claims 12 and 13 as anti-guiding laser fibres.

16. Use of the quartz glass according to any one or more of the claims 12 and 13 for the manufacture of pre-forms and fibres for generating a light-guiding structure, in particular gradient index fibres.

17. Use of the quartz glass according to any one or more of the claims 12 and 13 for fibre end caps or in core-cladding glass fibres.

## Revendications

1. Procédé de fabrication de verre de quartz dopé, comprenant les étapes suivantes :
a) mise à disposition d'une dispersion qui contient
1) des particules de SiO₂ et
2) un composant sélectionné parmi le groupe constitué d'un dopant et d'une substance précurseur d'un dopant ainsi que de mélanges quelconques de ceux-ci,
dans un liquide,
b) génération d'un précipité d'au moins une partie du dopant et/ou de la substance précurseur d'un dopant dans la dispersion,
c) réduction de la quantité de la phase liquide de la dispersion avec formation d'un produit intermédiaire dopé,
d) traitement du produit intermédiaire dopé avec un gaz ou un mélange gazeux qui contient une ou plusieurs source(s) de fluor gazeuse(s) avec génération d'un produit intermédiaire fluoré,
e) frittage du produit intermédiaire fluoré avec formation du verre de quartz dopé.

2. Procédé selon la revendication 1, **caractérisé en ce que** la source de fluor gazeuse est sélectionnée parmi le groupe constitué de gaz contenant du fluor organiques, de gaz contenant du fluor inorganiques et de composés contenant du fluor liquides à 25°C mais pouvant être évaporés dans des conditions de procédé, notamment sélectionnée parmi le groupe constitué de composés de fluorure de silicium, de fluorocarbones, du fluorure d'hydrogène, de fluorures d'azote, de fluorures de soufre, de fluorures métalliques, d'hydrofluorocarbones et d'hydrochlorofluorocarbones.

3. Procédé selon la revendication 1 ou 2, **caractérisé en ce que** la source de fluor gazeuse est sélectionnée parmi le groupe constitué du SiF₄, CF₄, SF₄, SF₆, NF₃, HF, C₂F₆ et de l'hexafluorodisiloxane (Si₂OF₆).

4. Procédé selon une ou plusieurs des revendications 1 à 3, **caractérisé en ce que** la pression partielle de la source de fluor gazeuse se situe entre 10⁻³ et 10000 mbar, de préférence entre 10 et 5000 mbar, notamment entre 20 et 1100 mbar, par exemple de 50 à 1000 mbar.

5. Procédé selon une ou plusieurs des revendications 1 à 4, **caractérisé en ce que** le produit intermédiaire dopé à l'étape d) est traité pendant une durée de 1 à 10000 minutes, de préférence 50 à 5000 minutes, de manière particulièrement préférée de 500 à 3000 minutes avec la/les source(s) de fluor gazeuse(s).

6. Procédé selon une ou plusieurs des revendications 1 à 5, **caractérisé en ce que** le traitement à l'étape d) qui s'effectue dans une chambre réactionnelle s'effectue par changement de gaz et/ou changement de pression ciblé ou par évacuation de la chambre réactionnelle et sollicitation subséquente de la chambre réactionnelle dans laquelle le produit intermédiaire dopé se trouve avec la source de fluor gazeuse.

7. Procédé selon une ou plusieurs des revendications 1 à 6, **caractérisé en ce que** un ou plusieurs oxydes des terres rares est/sont utilisé(s) en tant que dopant et/ou ses substances précurseurs.

8. Procédé selon une ou plusieurs des revendications 1 à 7, **caractérisé en ce que** la mise à disposition de la dispersion à l'étape a) s'effectue **en ce que** des particules de SiO₂ qui sont présentes dans un liquide sont amenées au(x) dopant(s) et/ou à sa/ses/leur(s) substance(s) précurseur(s) goutte à goutte et/ou au moyen d'un procédé de brouillard de pulvérisation.

9. Procédé selon une ou plusieurs des revendications 1 à 8, **caractérisé en ce qu'**une étape de traitement s'effectue en outre dans une atmosphère contenant du chlore, dans lequel cette étape de traitement s'effectue entre l'étape c) et d) et/ou entre l'étape d) et e), de préférence entre l'étape d) et e).

10. Procédé selon une ou plusieurs des revendications 1 à 9, **caractérisé en ce qu'**une étape de solidification s'effectue entre l'étape c) et d) avec formation d'un corps de moule, notamment par pressage supplémentaire du produit intermédiaire dopé avec formation d'une ébauche.

11. Procédé selon une ou plusieurs des revendications 1 à 10, **caractérisé en ce que** le dopant comprend des cations d'ytterbium.

12. Verre de quartz dopé pouvant être obtenu d'après un procédé selon une ou plusieurs des revendications 1 à 11, dans lequel le dopant est réparti de manière essentiellement homogène dans le verre de quartz dopé et le verre de quartz dopé comprend des cations d'aluminium, **caractérisé en ce que** la concentration en fluorure dans le verre de quartz dopé se situe au-dessus de 0,6 % mol.

13. Verre de quartz dopé selon la revendication 12, **caractérisé en ce qu'**il présente un gradient de concentration en fluor dans le cas duquel la concentration en fluor dans le verre de quartz dopé décroît de l'extérieur vers l'intérieur.

14. Utilisation du verre de quartz dopé selon une ou plusieurs des revendications 12 et 13 pour la réduction du photo-noircissement dans des matériaux actifs de laser.

15. Utilisation du verre de quartz selon une ou plusieurs des revendications 12 et 13 en tant que fibres laser d'anti-guidage.

16. Utilisation du verre de quartz selon une ou plusieurs des revendications 12 et 13 pour la fabrication de moules ébaucheurs et de fibres pour la génération d'une structure de guidage lumineux, notamment de fibres à gradient d'indice.

17. Utilisation du verre de quartz selon une ou plusieurs des revendications 12 et 13 pour des embouts de fibres ou dans des fibres de verre à coeur-gaine.
